# EUROPEAN PATENT APPLICATION

(11) **EP 2 977 814 A1**
(43) Date of publication of application: **27.01.2016**
(21) Application number: 15178289.3
(22) Date of filing: 24.07.2015
(51) Int. Cl.: G02F 1/1335

(54) **DISPLAY DEVICE**

(30) Priority: 24.07.2014 JP 2014150667; 24.07.2014 JP 2014150669; 09.07.2015 JP 2015137568
(71) Applicant: Funai Electric Co., Ltd., Daito-shi Osaka 574-0013 (JP)
(72) Inventor: KAWADA, Kazuaki, Daito-shi, Osaka 574-0013 (JP)
(74) Representative: Grünecker Patent- und Rechtsanwälte PartG mbB

(57) **Abstract**

Provided is a display device having a narrower bezel without deteriorating quality of an image displayed in an image display area. A display device (A) includes a display unit (6), a light source (3), an optical process member (4) having a peripheral edge part with a first depression (401), a support member (2) for supporting a peripheral edge part of a first surface of the optical process member (4), a holding member (5) disposed on a second surface side different from the first surface of the optical process member, and a second protrusion (52) protruding from the holding member (5) so as to be entered in the first depression (401).

## Description

### CROSS-REFERENCE TO RELATED APPLICATIONS

This application is based on Japanese Patent Applications No. 2014-150667 filed July 24, 2014, 2014-150669 filed July 24, 2014, and No. 2015-137568 filed July 9, 2015, contents of which are hereby incorporated by reference.

### BACKGROUND OF THE INVENTION

### Field of the Invention

The present invention relates to a display device.

### Description of Related Art

A liquid crystal display device includes a liquid crystal panel and a backlight disposed on a rear face of the liquid crystal panel so as to illuminate the liquid crystal panel with plane light. The backlight includes a light source and an optical process member like a rectangular plate for uniformizing luminance of light emitted from the light source. Further, the light source, the optical process member, and the liquid crystal panel are mounted in a shallow frame.

As this liquid crystal display device, there is a display device described in JP-A-2010-123398, for example. The display device described in JP-A-2010-123398 includes a sheet holder mounting portion and a diffusion plate mounting portion which protrude inward from side wall portions of a backlight chassis. A diffusion plate is disposed so that the diffusion plate mounting portion supports a peripheral edge part of the diffusion plate, while an optical sheet is overlaid on the diffusion plate so that the sheet holder holds a peripheral edge part of the optical sheet and presses the diffusion plate. Further, because the frame presses the sheet holder from the front face, the diffusion plate and the optical sheet are positioned and securely pressed.

In addition, in the liquid crystal display device, it is necessary that light (plane light) emitted from the backlight should correctly illuminate the liquid crystal panel. Accordingly, there is a proposed structure for relatively precisely aligning the liquid crystal panel, the light source, and the optical member, by mounting the liquid crystal panel, the light source, and the optical member (optical process member) in the frame after correctly positioning them (see, for example, JP-A-2004-258236).

In an electrical optical device described in JP-A-2004-258236, protrusions are formed on side faces of a light guide plate (equivalent to the optical process member) and a liquid crystal display panel, and the protrusions are inserted in holes provided to a frame. In this way, the light guide plate and the liquid crystal display panel can be relatively positioned and can be securely fixed to the frame.

In recent years, there is increasing demand for downsizing while improving design of the liquid crystal display device and maintaining a large image display area. In order to satisfy the demand, it is proposed to realize a narrow bezel in which a peripheral part (frame part) of the image display area is narrowed. Usually in a liquid crystal display device, the frame part hides a supporting part for supporting a peripheral edge part of the optical process member so as not to be seen from the front. When the frame part is narrowed, an area of the supporting part for supporting the peripheral edge part of the optical process member is decreased so that the optical process member cannot be securely held. In this way, uniformization of light luminance by the optical process member becomes insufficient so that quality of display image may be deteriorated.

In addition, in the case of JP-A-2010-123398 also, when realizing a narrower bezel, the diffusion plate mounting portion and the sheet holder mounting portion are required to be smaller, and hence it becomes difficult to securely press the diffusion plate and the optical sheet. In this way, uniformization of light luminance by the optical process member becomes insufficient so that quality of display image may be deteriorated.

In addition, in the display device such as the electrical optical device described in JP-A-2004-258236, the frame is made by processing metal (sheet metal) in many cases. In the case where the frame is made by processing sheet metal, the holes in which the protrusions are inserted have sharp tip edges in many cases, and hence the liquid crystal panel or the light guide plate (optical process member) may be cut by the sharp edge. As a result, malfunctions such as light leak or defective image display may be caused.

### SUMMARY OF THE INVENTION

It is an object of the present invention to provide a display device having a narrow bezel without deteriorating quality of an image displayed in the image display area.

It is another object of the present invention to provide a display device with a simple structure capable of displaying a stable and high quality image by protecting the optical process member from being cut.

A display device according to an aspect of the present invention includes a display unit, a light source, an optical process member having a peripheral edge part on which at least one of a first depression and a first protrusion is formed, a support member for supporting a peripheral edge part of a first surface of the optical process member, a holding member disposed on a second surface side different from the first surface of the optical process member, and at least one of a second protrusion to be entered in the first depression and a second depression to enter the first protrusion, formed on the support member or the holding member.

### BRIEF DESCRIPTION OF THE DRAWINGS

Fig. 1 is an exploded perspective view of a liquid crystal display device as an example of a display device according to the present invention.
Fig. 2 is a front view of a backlight of the liquid crystal display device shown in Fig. 1.
Fig. 3 is a cross-sectional view taken along line III-III of the backlight shown in Fig. 2.
Fig. 4 is a cross-sectional view taken along line IV-IV of the backlight shown in Fig. 2.
Fig. 5 is an enlarged schematic diagram of second protrusions of a cell guide.
Fig. 6 is a front view of a backlight used for another example of the liquid crystal display device according to the present invention.
Fig. 7 is a front view of a backlight of another example of the liquid crystal display device according to the invention.
Fig. 8 is a cross-sectional view of second protrusions of a cell guide used for the backlight shown in Fig. 7.
Fig. 9 is an enlarged view of the second protrusions of the cell guide used for the backlight shown in Fig. 7.
Fig. 10 is an enlarged view of a periphery of the second protrusions of the backlight used for still another example of the liquid crystal display device according to the present invention.
Fig. 11 is an exploded perspective view of the liquid crystal display device according to the present invention.
Fig. 12 is a front view of the backlight.
Fig. 13 is a cross-sectional view taken along line XIII-XIII of the backlight shown in Fig. 12.
Fig. 14 is an enlarged front view of a backlight positioning part shown in Fig. 12.
Fig. 15 is an enlarged schematic perspective view of the backlight positioning part shown in Fig. 12.
Fig. 16 is an enlarged view of the positioning part of another example of the liquid crystal display device according to the present invention.
Fig. 17 is an enlarged view of the positioning part of still another example of the liquid crystal display device according to the present invention.
Fig. 18 is an enlarged view of the positioning part of still another example of the liquid crystal display device according to the present invention.
Fig. 19 is an exploded perspective view of still another example of the liquid crystal display device according to the present invention.
Fig. 20 is a front view of the backlight of the liquid crystal display device shown in Fig. 19.
Fig. 21 is an exploded perspective view of a rear frame, an optical process member, and a cell guide of the liquid crystal display device shown in Fig. 19.
Fig. 22 is an exploded perspective view showing engagement between a protruding part of the rear frame and an engaging part of the cell guide.
Fig. 23 is a schematic cross-sectional view of the protruding part of the liquid crystal display device.
Fig. 24 is a schematic cross-sectional view of a part other than the protruding part of the liquid crystal display device.

### DETAILED DESCRIPTION OF THE PREFERRED EMBODIMENTS

### (First embodiment)

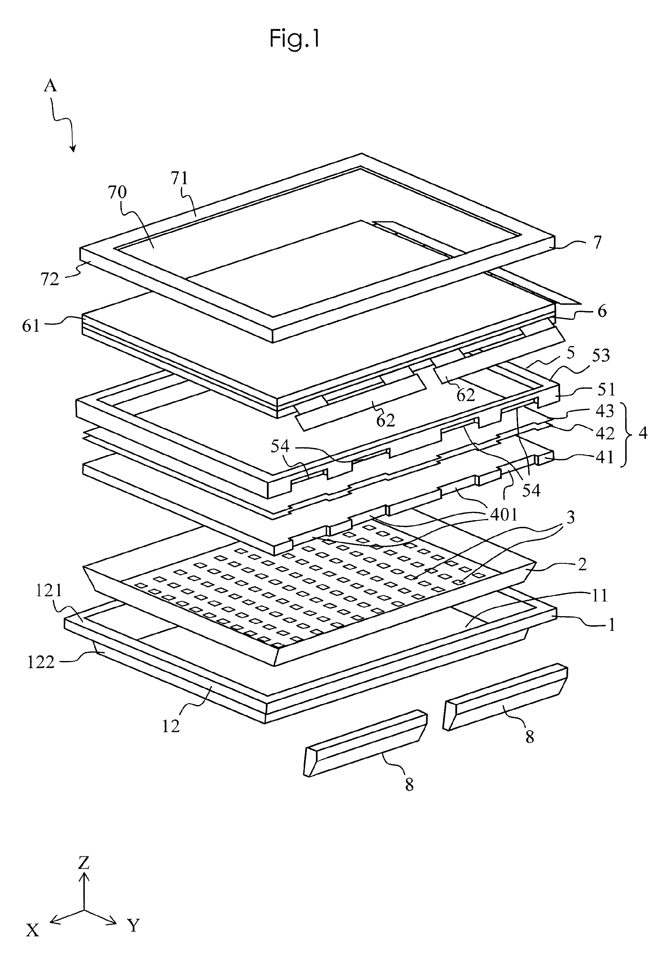

Now, an embodiment of the present invention is described with reference to the drawings. Fig. 1 is an exploded perspective view of a liquid crystal display device viewed from above, as an example of a display device according to the present invention. As shown in Fig. 1, a liquid crystal display device A includes a rear frame 1, a reflection sheet 2, LED lamps 3, an optical process member 4, a cell guide 5 (holding member), a liquid crystal cell 6, a bezel 7, and a substrate holder 8 (substrate holding member). Note that the rear frame 1, the reflection sheet 2, the LED lamps 3, the optical process member 4, and the cell guide 5 are combined to constitute the backlight. The substrate holder 8 is attached to the backlight and is electrically connected to the liquid crystal cell 6.

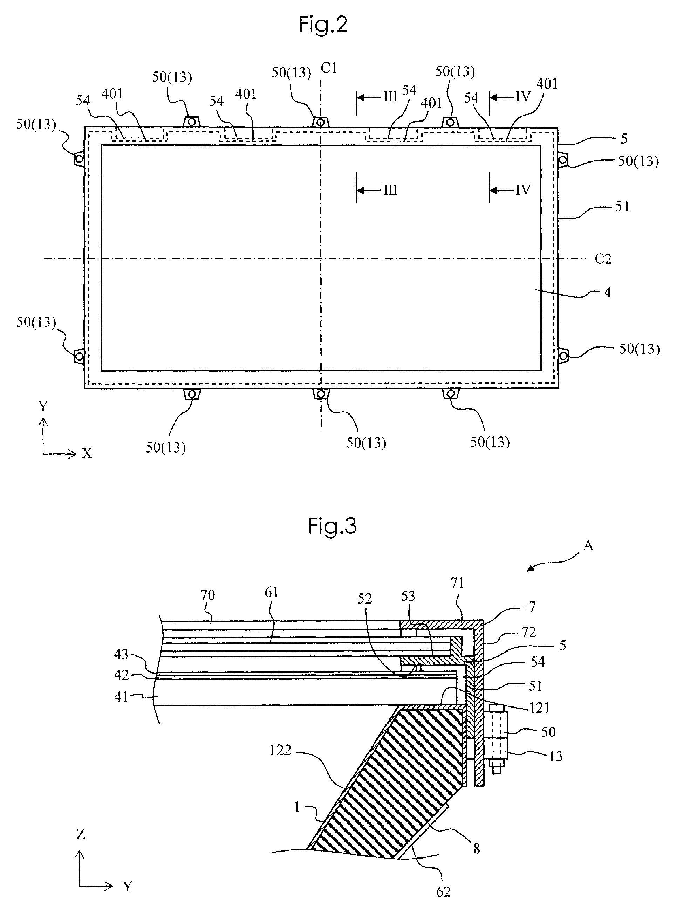

Note that, in the following description, a front face is an image display area side (facing an viewer) when the liquid crystal display device A is assembled, and is an upper side of the liquid crystal display device shown in Fig. 1. In addition, a rear side is a side opposite to the front side. Further, in the following description, the front face or the front side should be interpreted on the basis of the state of Fig. 1 unless otherwise noted. In addition, in Fig. 1, the front face side corresponds to a positive direction in a Z direction. When the liquid crystal display device A is viewed at the front, a lateral direction (i.e., a left and right direction in Fig. 2) is regarded as an X direction, and a vertical direction (i.e., an up and down direction in Fig. 2) is regarded as a Y direction in the following description. Further, in Fig. 2, a right side corresponds to a positive direction in the X direction, and an upper side corresponds to a positive direction in the Y direction.

The rear frame 1 is formed by bending a metal sheet and has a rectangular bottom part 11 and a raised part 12 protruding from four sides of the bottom part 11. The raised part 12 includes a support part 121 (support member) formed like a frame parallel to the bottom part 11, and a slanting part 122 disposed between the bottom part 11 and the support part 121. The support part 121 works together with the cell guide 5 to sandwich and hold a peripheral edge part of the optical process member 4 (as described later in detail).

The reflection sheet 2 is disposed on an inner surface of the rear frame 1, so as to reflect light emitted backward from the LED lamps 3 to the front side. As the reflection sheet 2, a sheet having a white color surface is used here, but this is not a limitation. Any other material having a surface of reflecting light emitted from the LED lamps 3 can be adopted. In addition, if the inner surface of the rear frame 1 can reflect the light emitted from the LED lamps 3, the reflection sheet 2 may be eliminated.

The LED lamps 3 are arranged on the reflection sheet 2 in a two-dimensional manner and have a structure including elements emitting white color light. The LED lamps 3 are connected to wiring (substrate) for supplying electric power, and the wiring is disposed on a rear side of the reflection sheet 2. In this way, it is possible to suppress a variation of luminance due to a difference of reflectivity between the reflection sheet 2 and the wiring. Note that it is possible to configure to dispose the LED lamps 3 directly on the rear frame 1.

The optical process member 4 includes a diffusion plate 41 that diffuses light entered from the rear face inside itself so as to uniformize luminance of the light and emits the light from the front face, and optical sheets 42 and 43 disposed adjacent to the front face of the diffusion plate 41. As the optical sheets, there are a diffusion sheet for further diffusing the light emitted from the front face of the diffusion plate 41, a luminance increasing sheet for ordering propagation directions of light so as to increase the light luminance, a polarization splitting sheet, a lens sheet, and the like. In addition, without limiting to these sheets, various sheets having a structure for uniformizing luminance of light (plane light) entering the liquid crystal cell 6 can be adopted. Further, although the optical process member 4 has a structure including the two optical sheets 42 and 43, this structure is not a limitation. The optical process member 4 may have a single optical sheet or may have three or more optical sheets.

A peripheral edge part of a rear face of the optical process member 4 constituted of the diffusion plate 41 and the optical sheets 42 and 43 overlaid on the diffusion plate 41, namely a rear face of the diffusion plate 41 is contacted with the support part 121 of the rear frame 1. In addition, a peripheral edge part of a front face of the optical process member 4 is contacted with the cell guide 5. Further, the optical process member 4 is sandwiched and held between the support part 121 and the cell guide 5.

The cell guide 5 is a rectangular frame member having a through window in the center. The cell guide 5 presses the peripheral edge part of the front face of the optical process member 4 and holds a peripheral edge part of a rear face of the liquid crystal cell 6. The cell guide 5 includes a side wall portion 51 that surrounds peripheries of the raised part 12 of the rear frame I and the optical process member 4 supported by the support part 121, and a plate-like pressing part 52 protruding inward from the side wall portion 51. The side wall portion 51 is positioned to contact with an outer peripheral face of the raised part 12. In addition, the pressing part 52 includes a contact part that presses a part of the optical process member 4 supported by the support part 121 from the front side toward the support part 121. The contact part is made of a soft (elastic) material such as rubber or silicone in order not to damage the optical process member 4.

In addition, a cell holding part 53 for holding a peripheral edge part of the liquid crystal cell 6 (see Fig. 3) is formed on a side of the pressing part 52 opposite to the rear frame 1. The cell guide 5 is fixed to the rear frame 1 by screwing engaging parts 50 described later to fixing parts 13 described later.

The liquid crystal cell 6 includes a liquid crystal panel 61 and a control substrate 62 connected to the liquid crystal panel 61. The liquid crystal panel 61 has a structure in which two transparent substrates with transparent electrodes, switching elements, and the like are disposed in parallel, and liquid crystal is filled in a gap between the transparent substrates. Note that a color filter, an orientation film, a polarization film, and the like are also disposed on the transparent substrate. Further, a voltage between the transparent electrodes provided to the two transparent substrates respectively is adjusted so that an orientation direction of the liquid crystal is adjusted, and hence polarization of each pixel (light transmittance) is adjusted. In this way, transmitted light forms an image on the front side transparent substrate. The control substrate 62 is equipped with a control circuit that is connected to the transparent electrodes and controls the switching elements to operate to control the voltage between the transparent electrodes provided to the transparent substrates.

The bezel 7 is a metal frame that presses a peripheral edge part of a front face of the liquid crystal panel 61. The bezel 7 is provided with an opening 70 for watching the image display area of the liquid crystal cell 6, and includes a frame part 71 provided to surround an outer periphery of the opening 70 and a side peripheral part 72 formed integrally to a peripheral edge part of the frame part 71. The frame part 71 is an integral plate-like member, which hides the wiring, the cell guide, the substrate, and the like disposed on an outer periphery of the image display area of the liquid crystal display device A so that they are not seen. The bezel 7 is fixed to the rear frame 1 with screws.

The substrate holder 8 is fixed to a backside of the support part 121 on the side face of the raised part 12 of the rear frame 1. The substrate holder 8 is a member for holding the control substrate 62. The substrate holder 8 is insulated from the rear frame 1. In addition, the control substrate 62 supplies electric signals to the transparent electrodes and the switching elements of the liquid crystal panel 61. The control substrate 62 and the transparent electrodes of the liquid crystal panel 61 are connected via a flexible printed circuit (FPC).

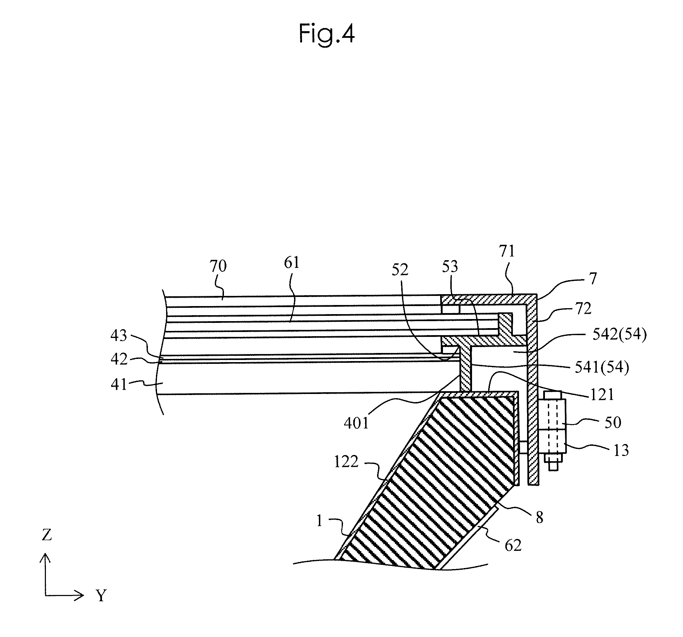

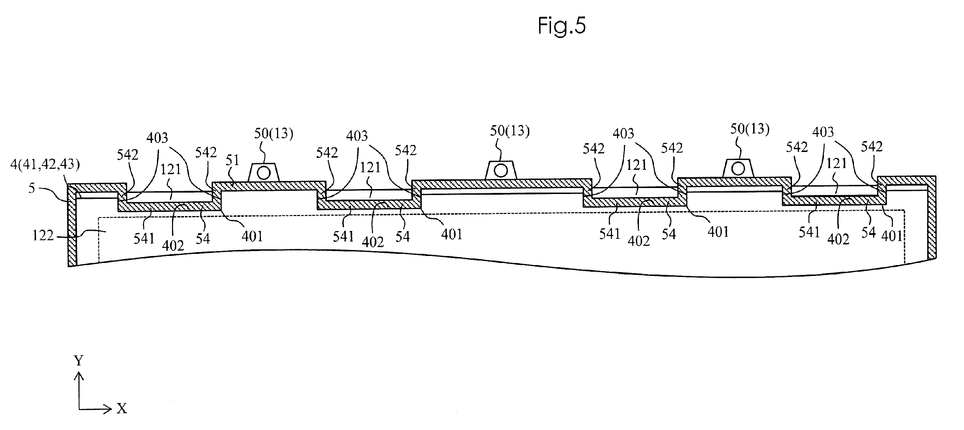

Next, the optical process member 4 and the cell guide 5 as principal parts of the present invention are described with reference to the drawings. Fig. 2 is a front view of the backlight of the liquid crystal display device shown in Fig. 1, Fig. 3 is a cross-sectional view taken along line III-III of the backlight shown in Fig. 2, Fig. 4 is a cross-sectional view taken along line IV-IV of the backlight shown in Fig. 2, and Fig. 5 is an enlarged schematic diagram of a second protrusion of the cell guide. In Fig. 3 and Fig. 4, for convenience sake of description, the liquid crystal cell 6 and the bezel 7 are also illustrated.

As shown in Fig. 2, the optical process member 4 is provided with first depressions 401 formed on the upper side when the liquid crystal display device A is in use. The first recess 401 has a U shape viewed from the front (viewed in the Z direction), and has a bottom face 402 parallel to the upper side of the optical process member 4 and an inner faces 403 extending from both sides of the bottom face 402. Further, the first depression 401 has a shape opening outside. In addition, total four of the first depressions 401 are disposed at symmetric positions with respect to a center line (C1) in the left and right direction (X direction) of the optical process member 4 so that two of them are disposed on each of the left and right sides. A depth of the first depression 401 from a side face of the optical process member 4 is smaller than the width of the support part 121 of the rear frame 1 viewed from the front.

In addition, the first depressions 401 are formed in both the diffusion plate 41 and the optical sheets 42 and 43 included in the optical process member 4. Further, the optical sheets 42 and 43 are precisely overlaid on the front face of the diffusion plate 41.

As shown in Fig. 2, the rear frame 1 is provided with fixing parts 13 protruding outward from the outer peripheral wall. On the other hand, the side wall portion 51 is provided with engaging parts 50 protruding outward. As shown in Fig. 2, the fixing parts 13 and the engaging parts 50 are disposed at three points of each of two long sides of the backlight and at two points of each of two short sides. Further, the fixing parts 13 and the engaging parts 50 provided to each side are disposed at symmetric positions with respect to the center line (C1) dividing the side into two equal segments. As shown in Fig. 2, in the long side of the backlight, one fixing part 13 and one engaging part 50 are disposed on the center line, while one fixing part 13 and one engaging part 50 are disposed on each position near each end of the long side. In addition, in the short side of the backlight, one fixing part 13 and one engaging part 50 are disposed on each position near each end of the of the short side. Note that the numbers of the fixing parts 13 and the engaging parts 50 is not limited to those described above. Any numbers can be adopted as long as the cell guide 5 can be securely fixed to the rear frame 1.

As shown in Fig. 3, when the cell guide 5 is disposed on the front side of the rear frame 1, the engaging parts 50 are positioned to be overlaid on the fixing parts 13 in the front and rear direction and are fixed with screws, so that the cell guide 5 can be securely fixed to the rear frame 1. In this way, the peripheral edge part of the front face of the optical process member 4 is securely sandwiched between the pressing part 52 and the support part 121.

In a part of the optical process member 4 of the backlight, where the first depression 401 is not formed, the side wall portion 51 of the cell guide 5 covers the outside of the outer peripheral wall of the rear frame 1. This side wall portion 51 covers the entire periphery of the outer peripheral wall of the rear frame 1 except for the parts where the first depressions 401 are formed, and hence has an effect of preventing the cell guide 5 from shifting.

As shown in Fig. 4, a second protrusion 54 is disposed in a part of the cell guide 5 corresponding to the first depression 401 in the front and rear direction. As shown in Figs. 4 and 5, the second protrusion 54 is a plate-like member (rib) formed to protrude from a surface of the pressing part 52 facing the rear frame 1. As shown in Fig. 5, the second protrusion 54 has a U shape viewed from the front (viewed in the Z direction). The second protrusion 54 includes an elongated part 541 extending in the direction along the long side of the backlight and connecting parts 542 that are connected to both end portions of the elongated part 541 and are perpendicular to the elongated part 541 viewed from the front (viewed in the Z direction).

As shown in Figs. 4 and 5, when the cell guide 5 is attached to the rear frame 1, the second protrusions 54 correspond to the first depressions 401 of the optical process member 4 viewed from the front (viewed in the Z direction). A length of the connecting part 542 viewed from the front (viewed in the Z direction) is longer than a half length (width) of the support part 121 in a direction perpendicular to the longitudinal direction. Further, the elongated part 541 is disposed inside the center of the support part 121 in the width direction (inside the rear frame 1).

In other words, as to the cell guide 5, the pressing parts 52 presses parts of the optical process member 4 other than the first depressions 401, and the second protrusions 54 contact with the support part 121 (rear frame 1) at parts where the first depressions 401 of the optical process member 4 are formed. As to the cell guide 5, the second protrusions 54 supports the pressing parts 52 so as to prevent the pressing part 52 from being inclined to be close to or away from the rear frame 1. In other words, compared with a structure in which the cell guide 5 contacts with the rear frame 1 only at the side wall portion 51, it is possible to press the optical process member 4 with more stable position and force.

In addition, the pressing part 52 of the cell guide 5 includes a part for pressing the optical process member 4 in the longitudinal direction and the second protrusion 54 for supporting to prevent the pressing part 52 from inclining. For this reason, even if a width of the support part 121 is small, the cell guide 5 can press the peripheral edge part of the optical process member 4 so that the optical process member 4 does not move or warp.

The optical process member 4 and the cell guide 5 are attached to the rear frame 1 to which the reflection sheet 2, the LED lamps 3, and the substrate holder 8 are attached. In this state, the liquid crystal panel 61 of the liquid crystal cell 6, which is assembled separately, is placed on the cell holding part 53 of the cell guide 5. In this case, the control substrate 62 is attached to the liquid crystal panel 61 via the flexible printed circuit FPC, and this control substrate 62 is fixed to the substrate holder 8. Further, after the control substrate 62 is fixed to the substrate holder 8, the bezel 7 is positioned to press a part of the liquid crystal panel 61 outside the image display area, and the bezel 7 is fixed to the rear frame 1. In this case, the frame part 71 of the bezel 7 is positioned to cover the front face of the cell guide 5, so that the cell guide 5 is hidden viewed from the front (viewed in the Z direction).

If a width of the frame part 71 of the bezel 7 is decreased, it is necessary to decrease the widths of the support part 121 and the cell guide 5 so that the narrow frame part 71 can hide the support part 121 and the cell guide 5. In the backlight of the liquid crystal display device A, even if the width of the support part 121 of the rear frame 1 is small, the cell guide 5 can securely press the optical process member 4 so as to suppress luminance unevenness of the light (plane light) after passing through the optical process member 4 due to shift or warp of the optical process member 4. In this way, the liquid crystal display device A according to the present invention can realize a narrower bezel without deteriorating quality of a displayed image.

In addition, a general liquid crystal display device has a recessed handling part on an upper part of an outer casing in many cases. When the liquid crystal display device is held by the handling part and is moved, a force acts on an upper part of the backlight, so that the pressing part 52 of the cell guide 5 is apt to be deformed in the direction separating from the optical process member 4. In the liquid crystal display device A according to the present invention, the second protrusions 54 contact with the support part 121 so as to prevent the pressing part 52 from separating from the optical process member 4. In this way, it is possible to suppress deterioration of image quality.

Further, in the case where the handling part of the liquid crystal display device A is formed on the upper part, it is preferred that the second protrusions 54 of the cell guide 5 and the first depressions 401 of the optical process member 4 are formed on a side positioned on the upper side of the backlight when the liquid crystal display device A is in use. However, this is not a limitation. The first depressions 401 may be formed on a side other than the side positioned on the upper side among four sides of the optical process member 4. In this case also, it is possible to suppress deterioration of image quality due to luminance unevenness.

In this embodiment, the second protrusion 54 is formed in a U shape of a plate-like member, but this is not a limitation. For instance, it may be formed to protrude in a rectangular parallelepiped. In addition, it may be formed by connecting the connecting part 542 to the center of the elongated part 541 in a T shape viewed from the front (viewed in the Z direction). In this case, the connecting part 542 may be integrally connected to the side wall portion 51 or may not be integrally connected to the same. If it is integrally connected to the side wall portion 51, strength of the second protrusion 54 can be enhanced.

In addition, the second protrusion 54 may have a structure including a single rib extending in a direction crossing the extending direction of the support part 121. In this case, the first recess 401 of the optical process member 4 may have a width for the rib to fit in or may have a certain width in a direction along the side.

### (Second embodiment)

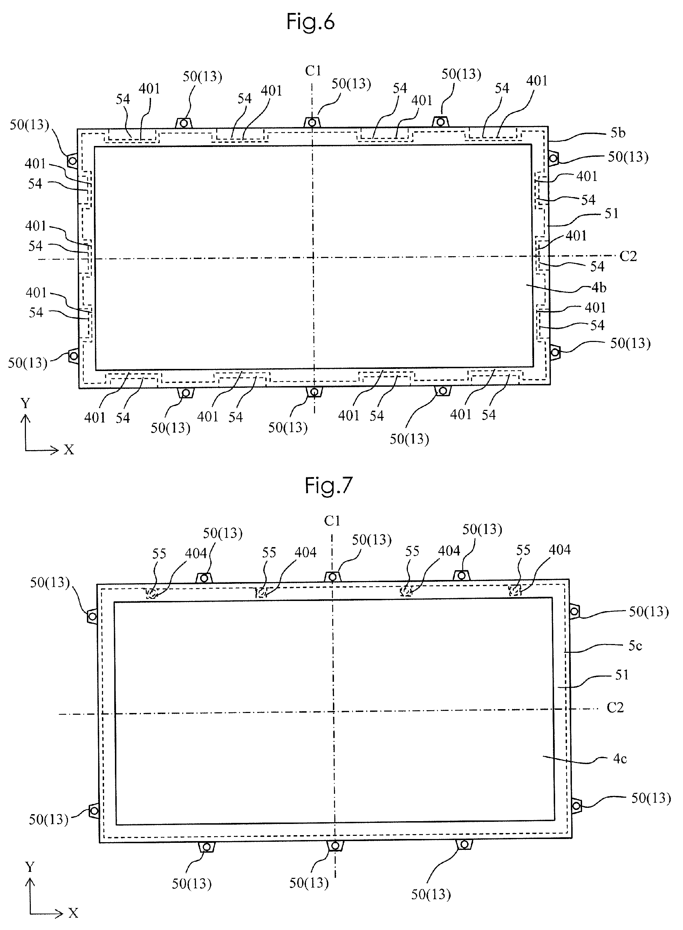

Another example of the liquid crystal display device according to the present invention is described with reference to the drawings. Fig. 6 is a front view of a backlight used for another example of the liquid crystal display device according to the present invention. In the backlight shown in Fig. 6, the first depressions 401 are formed in all four sides of an optical process member 4b. In addition, the second protrusions 54 that engage with the first depressions 401 are formed in the four sides of a cell guide 5b. Further, other parts are the same as those in the first embodiment. Substantially the same part is denoted by the same reference numeral, and description thereof is omitted.

As shown in Fig. 6, the first depressions 401 are formed in all four sides of the rectangular shape of the optical process member 4b viewed from the front (viewed in the Z direction). Two first depressions 401 are formed on each of the left and right of two long sides of the optical process member 4b so as to be symmetric with respect to a center axis C1. In addition, total three first depressions 401 are formed in a short side, including one in a center part and two on the upper and lower positions with respect to a center axis C2 perpendicular to the center axis C1.

Because the optical process member 4b with the first depressions 401 formed in all four sides and the cell guide 5b with the second protrusions 54 formed in all four sides are provided, the cell guide 5b can be securely attached to the rear frame 1, and it is possible to securely prevent deformation or movement of the optical process member 4b.

In addition, an angle of the liquid crystal display device A may be changed in order to obtain a good view in the image display area after the liquid crystal display device A is installed. When the four sides of the liquid crystal display device A are pressed or pulled, the four sides are apt to be deformed by a force (moment) in a direction that the pressing part 52 of the cell guide 5b is separated from the optical process member 4b, namely in a twisting direction. Because the second protrusion 54 has the width in the twisting direction of the pressing part 52, even if the force in the twisting direction acts on the pressing part 52, the second protrusion 54 contacts with the support part 121 so that the pressing part 52 is prevented from separating from the optical process member 4b. Thus, a collapse of the cell guide 5b can be prevented.

In this way, deformation or movement of the optical process member 4b can be prevented, and deterioration of image quality due to unevenness of luminance of light from the backlight can be suppressed.

Further, the first depressions 401 are formed on each side at the same positions as the first depressions 401 formed on the opposite side (the upper side and the lower side, the right side and the left side, in Fig. 6) in the backlight shown in Fig. 6, but this is not a limitation. The first depressions 401 may be formed at different positions between opposite sides, and the number of the first depressions 401 may be different between opposite sides.

In addition, the first depressions 401 are formed on all four sides of the rectangular optical process member 4b viewed from the front (viewed in the Z direction) in the backlight shown in this embodiment, but this is not a limitation. For instance, the first depressions 401 may be formed on opposite sides (the upper side and the lower side, or the right side and the left side) of the optical process member 4b when the liquid crystal display device A is in use. Further, in the same manner, the first depressions 401 may be formed on neighboring sides (crossing at a comer; for example, the upper side and the left side, or the lower side and the right side). In this case also, deterioration of image quality due to unevenness of luminance of light from the backlight can be suppressed.

### (Third embodiment)

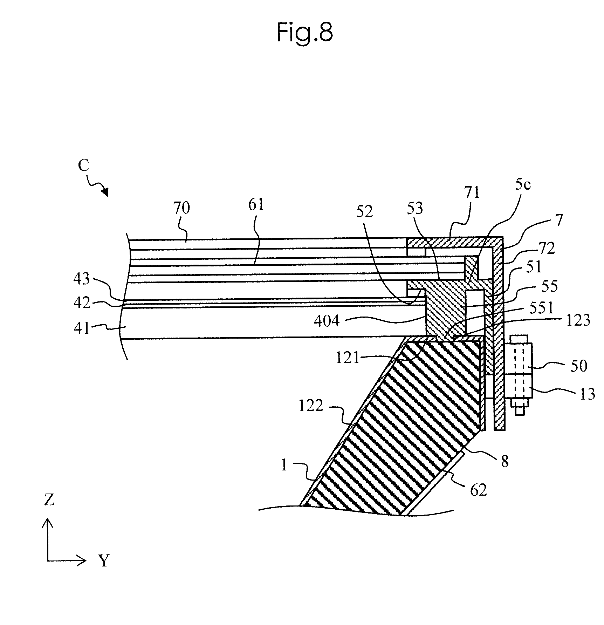

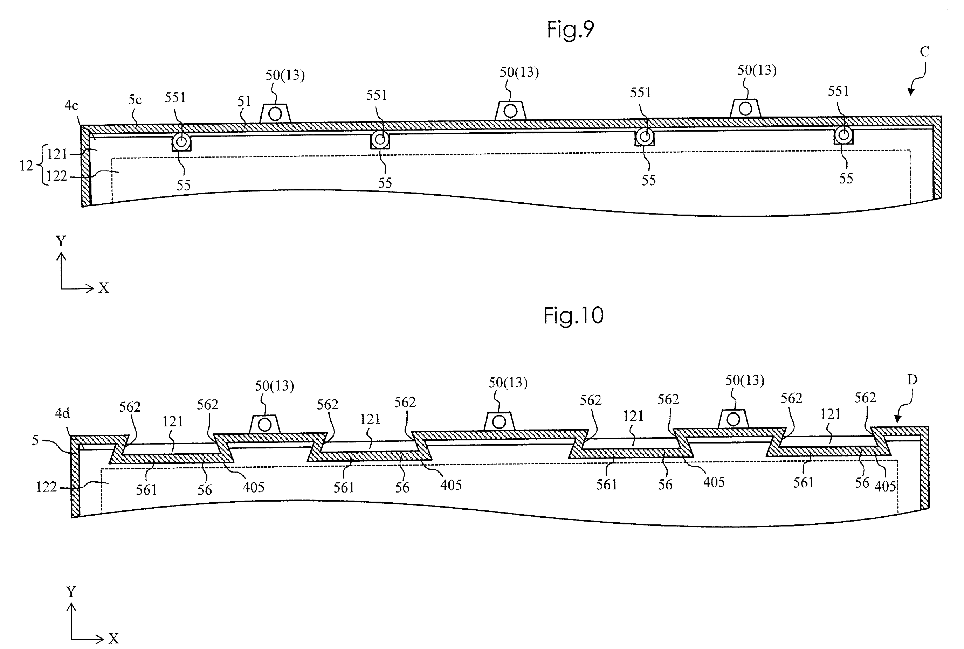

Another example of the liquid crystal display device according to the present invention is described with reference to the drawings. Fig. 7 is a front view of a backlight of the another example of the liquid crystal display device according to the present invention, Fig. 8 is a cross-sectional view of the second protrusion of the cell guide used for the backlight shown in Fig. 7, and Fig. 9 is an enlarged view of the second protrusion of the cell guide used for the backlight shown in Fig. 7. In the backlight of the liquid crystal display device according to this embodiment, second protrusions 55 as positioning bosses are formed on the pressing part 52 of a cell guide 5c, and positioning holes 123 in which engaging protrusions 551 of the second protrusions 55 are inserted are formed on the support part 121 of the rear frame 1. In addition, the optical process member 4c is provided with first depressions 404 with which the second protrusions 55 are engaged. Other parts have the same structure as that of the liquid crystal display device A described above in the first embodiment. Substantially the same part is denoted by the same reference numeral, and description thereof is omitted.

As shown in Fig. 7, the optical process member 4c is provided with the first depression 404 at the center part of one long side, which is smaller than other first depressions 401 viewed from the front (viewed in the Z direction). In addition, a second protrusion 55 is formed at a part corresponding to the first depression 404 of the pressing part 52 of the cell guide 5c. As shown in Figs. 7 and 8, the second protrusion 55 has a cylindrical shape. Further, the second protrusion 55 is formed in a shape and a size to contact with each of a bottom face and an inner wall face of the first depression 404.

The positioning hole 123 is a circular through hole having an inner diameter that is the same as an outer diameter of the engaging protrusion 551. In other words, when the engaging protrusion 551 is inserted in the positioning hole 123, the engaging protrusion 551 can be prevented from dropping off from the positioning hole 123. Further, in this embodiment, it is sufficient that the engaging protrusion 551 and the positioning hole 123 are engaged with each other so as not to be detached from each other and not to move. For instance, it is possible to configure that the engaging protrusion 551 is pressed into the positioning hole 123. In addition, it is possible to configure that the second protrusion 55 itself is pressed into the positioning hole 123.

Further, the peripheral edge part of the optical process member 4c is contacted with the support part 121 of the rear frame 1. In this case, the first depression 404 is overlaid on the positioning hole 123 of the rear frame 1 in the front and rear direction. Further, the cell guide 5c is disposed so that the cell guide 5c and the rear frame 1 sandwich the peripheral edge part of the optical process member 4c. In this case, the second protrusion 55 is contacted with the bottom face and the inner wall face of the first depression 404 and is inserted in the positioning hole 123.

In this way, when the engaging protrusion 551 on the tip of the second protrusion 55 is inserted in the positioning hole 123, the rear frame 1 and the cell guide 5c are positioned to each other. Further, when the second protrusion 55 contacts with the bottom face and the inner face of the positioning first depression 404, the optical process member 4c can be positioned with respect to the cell guide 5c and the rear frame 1. Further, when the cell guide 5c is fixed to the rear frame 1, the optical process member 4c can be sandwiched and fixed between the rear frame 1 and the cell guide 5c. Further, because the liquid crystal cell 6 is held and positioned by the cell guide 5c, the optical process member 4c and the liquid crystal cell 6 can be relatively positioned. In this way, the plane light from the backlight can correctly enter the liquid crystal cell 6, and an image can be correctly displayed in the image display area.

### (Fourth embodiment)

Still another example of the liquid crystal display device according to the present invention is described with reference to the drawings. Fig. 10 is an enlarged view of a periphery of the second protrusion of the backlight used for the still another example of the liquid crystal display device according to the present invention. The backlight of the liquid crystal display device according to this embodiment is provided with second protrusions 56 formed on a cell guide 5d and first depressions 405 formed on an optical process member 4d. Other parts have the same structure as the backlight of the liquid crystal display device A of the first embodiment. Substantially the same part is denoted by the same reference numeral, and description thereof is omitted.

As shown in Fig. 10, the first depression 405 of the optical process member 4d is formed in a trapezoidal shape having a long inner side (bottom face) and a short outer side (opening). In addition, the cell guide 5d is provided with second protrusions 56 that can engage with the first depressions 405. The second protrusion 56 includes an elongated part 561 and connecting parts 562 provided to both ends of the elongated part 561 so as to form an angle other than a right angle between the elongated part 561 and the connecting part 562.

Further, when the cell guide 5d is attached from the front side of the optical process member 4d, the elongated part 561 is disposed to face (contact with) the bottom face of the first depression 405, and the connecting part 562 is disposed to face (contact with) the inner wall. With this arrangement, it is possible to prevent the cell guide 5d from dropping off outward in the direction perpendicular to a side of the optical process member 4d.

Because the optical process member 4d includes the first depressions 405 while the cell guide 5d includes the second protrusions 56, even if the rectangular cell guide 5d is divided for each side, the optical process member 4d can be securely pressed. In addition, when using the cell guide 5d having the divided structure, even if a screw fixing the cell guide 5d to the rear frame 1 is loosen, movement or warp of the optical process member 4d due to deviation of the cell guide 5d can be suppressed.

In addition, the second protrusion 56 may have a structure in which two ribs are connected to each other in a V shape viewed from the front (viewed in the Z direction). The bent part of the V shape may be inside or outside of the optical process member 4d. In addition, it is possible to use a column-shaped second protrusion having a circular, oval, or rectangular shape viewed from the front and a cross section in which a length in the direction along a side with the first depressions 405 is longer than a length in the direction along a side of the opening of the first depressions 405. The second protrusion has a shape contacting with the inner surface of the first depressions 405 when being positioned in the first depressions 405, and hence movement of the optical process member 4d along a side can be suppressed in an appropriate manner.

In the embodiments described above, the rear face type backlight including the LED lamps arranged in a two-dimensional manner on the bottom part of the rear frame is exemplified as the liquid crystal display device, but this is not a limitation. It is possible to use an edge light type backlight in which a light guide plate is used and LED lamps are arranged to face a side face of the light guide plate. In this case, it is possible to use the light guide plate instead of the diffusion plate of the optical process member.

### (Fifth embodiment)

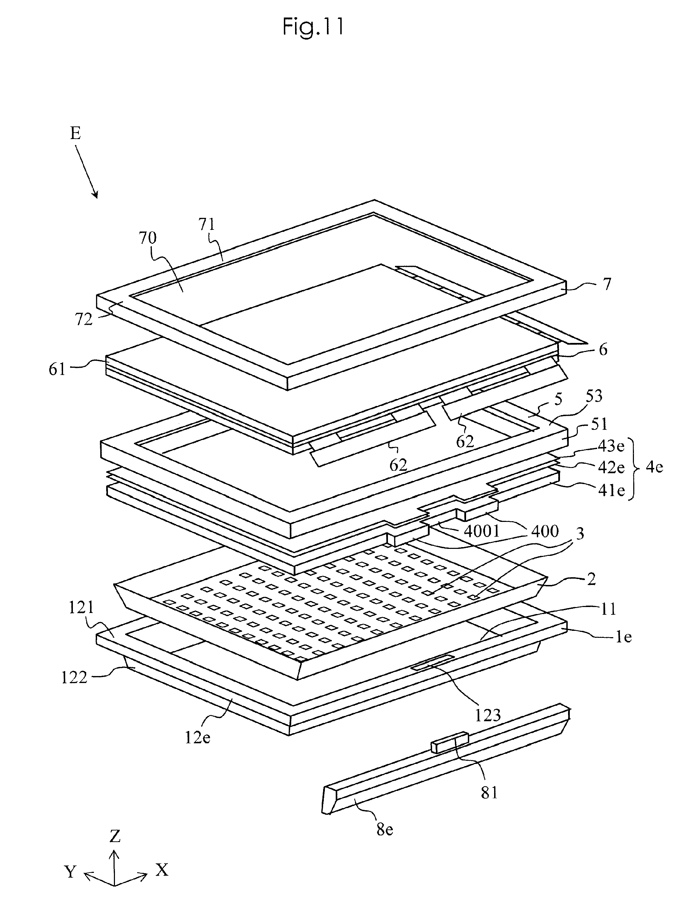

Hereinafter, still another example of the liquid crystal display device according to the present invention is described with reference to the drawings. Fig. 11 is an exploded perspective view of the liquid crystal display device according to the present invention viewed from below. Note that a liquid crystal display device E shown in Fig. 11 has the same structure as the liquid crystal display device A except for a rear frame 1e, an optical process member 4e, and a substrate holder 8e, which have different structures. For this reason, in the liquid crystal display device E, substantially the same part as the liquid crystal display device A is denoted by the same reference numeral, and description thereof is omitted.

The rear frame 1e is formed by bending a metal sheet, and has the rectangular bottom part 11 and the raised part 12 protruding from four sides of the bottom part 11. The raised part 12 includes the support part 121 formed like a frame parallel to the bottom part 11, and the slanting part 122 disposed between the bottom part 11 and the support part 121. The support part 121 and the cell guide 5 sandwich and hold a peripheral edge part of the optical process member 4e.

Among the support parts 121 formed on the four sides of the rear frame 1 e, the support part 121 disposed on the lower side in the state where the liquid crystal display device E is in use is provided with the positioning hole 123 formed in the middle part. The positioning hole 123 is a rectangular through hole extending in the same direction as the longitudinal direction of the support part 121.

The optical process member 4e includes a diffusion plate 41e and optical sheets 42e and 43e disposed adjacent to the front face of the diffusion plate 41 e. Further, as the optical sheets, there are a diffusion sheet for further diffusing the light emitted from the front face of the diffusion plate 41, a luminance increasing sheet for regulating propagation directions of light so as to increase the light luminance, and the like. In addition, without limiting to these sheets, various sheets having a structure for uniformizing luminance of light (plane light) entering the liquid crystal cell 6 can be adopted. Further, although the optical process member 4e has a structure including the two optical sheets 42e and 43e, this structure is not a limitation. The optical process member 4e may have a single optical sheet or may have three or more optical sheets.

A peripheral edge part of a rear face of the optical process member 4e constituted of the diffusion plate 41e and the optical sheets 42e and 43e overlaid on the diffusion plate 41e, namely the rear face of the diffusion plate 41e is contacted with the support part 121 of the rear frame 1e. In addition, a peripheral edge part of a front face of the optical process member 4e is contacted with the cell guide 5 (holding member). Further, the optical process member 4e is sandwiched and held between the support part 121 and the cell guide 5.

The substrate holder 8e is fixed to the back of the support part 121 of the rear frame 1 so as to hold the control substrate 62. The substrate holder 8e is a resin molded body so as to insulate between the control substrate 62 attached to the substrate holder 8e and the rear frame 1e. In addition, the control substrate 62 supplies electric signals to the transparent electrodes of the liquid crystal panel 61 and the switching elements. The control substrate 62 and the transparent electrodes of the liquid crystal panel 61 are connected via a flexible printed circuit (FPC).

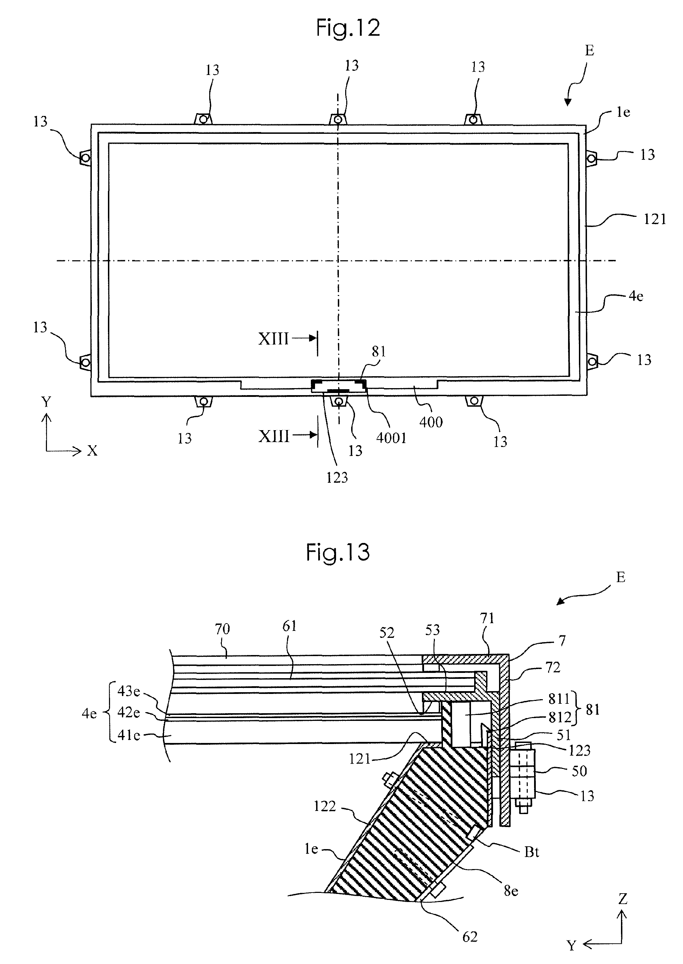

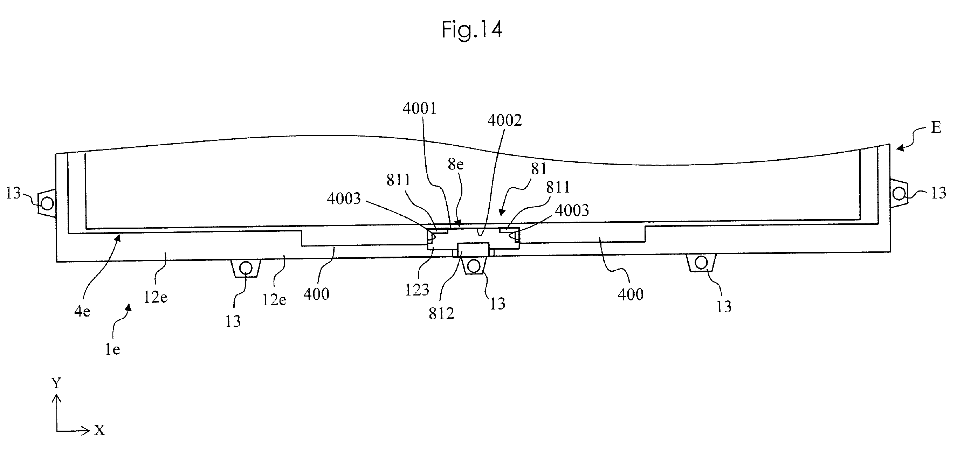

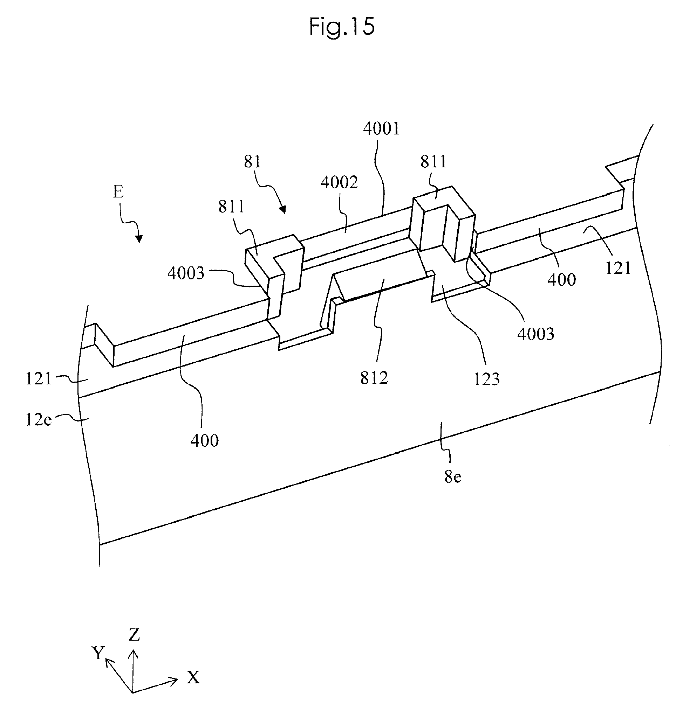

Next, the rear frame 1e, the optical process member 4e, and the substrate holder 8e as principal parts of the present invention are described with reference to the drawings. Fig. 12 is a diagram of the backlight viewed from the front face. Fig. 13 is a cross-sectional view taken along line XIII-XIII of the backlight shown in Fig. 12, and Fig. 14 is an enlarged front view of a backlight positioning part shown in Fig. 12. In addition, Fig. 15 is an enlarged schematic perspective view of the backlight positioning part shown in Fig. 12.

As shown in Fig. 12, the optical process member 4e includes a bulging part 400 having a rectangular shape viewed from the front (viewed in the Z direction), which is formed on a lower side when the liquid crystal display device E is in use, and first depressions 4001 having a U shape viewed from the front (viewed in the Z direction), which is formed in the middle of the bulging part 400. The first depression 4001 has a bottom face 4002 parallel to a lower long side of the optical process member 4e and an inner faces 4003 extending from both ends of the bottom face 4002. Further, the first depression 4001 opens outward. In addition, three of the first depressions 4001 are disposed with the same intervals on the lower long side of the optical process member 4e.

Further, in this embodiment, the diffusion plate 41e and the optical sheets 42e and 43e included in the optical process member 4e have the same shape viewed from the front (viewed in the Z direction), so that the diffusion plate 41e and the optical sheets 42e and 43e are precisely overlaid in the front and rear direction, but this is not a limitation. For instance, it is possible to configure the bulging part 400 and the first depression 4001 to be formed only in the diffusion plate 41e having a certain hardness, and to configure the optical sheets 42e and 43e to have a size and shape overlaying a rectangular part viewed from the front (viewed in the Z direction) of the diffusion plate 41e except the bulging part 400. In this case also, the optical sheets 42e and 43e are formed so that the peripheral edge parts of the optical sheets 42e and 43e are pressed by the pressing part 52 of the cell guide 5.

The positioning hole 123 of the rear frame 1e is formed to be overlaid on the first depression 4001 when the diffusion plate 41e is correctly positioned.

As described above, the substrate holder 8e is disposed behind the support part 121 of the rear frame 1e. The substrate holder 8e is fixed to the raised part 12 of the rear frame 1e with screw or other well-known fixing means. Further, the substrate holder 8e has a second protrusion 81 used for positioning, which is formed to penetrate the positioning hole 123 and protrude from the support part 121 when the substrate holder 8e is attached to the rear frame 1e. The substrate holder 8e may cover the rear face of the support part 121 by itself or may be divided appropriately. In addition, a plurality of positioning holes 123 and second protrusions 81 may be provided.

As shown in Figs. 14 and 15, the second protrusion 81 includes a pair of positioning ribs 811 disposed in a symmetric manner and a stopper rib 812 that engages with the edge part of the positioning hole 123 for retaining the second protrusion 81 not to drop off from the positioning hole 123.

As shown in Fig. 14, the positioning rib 811 has an L shape viewed from the front (viewed in the Z direction). One rib constituting the L shape is positioned to contact with a long side of the positioning hole 123, and the other rib is positioned to contact with a short side of the positioning hole 123. Further, one ribs of the pair of positioning ribs 811 are formed to contact with the same long side of the positioning hole 123, and the other ribs are formed to contact with different short sides. In other words, each of the pair of positioning ribs 811 has a shape in which one rib and the other rib abut to each other, and the abutting corner contacts with one corner of the positioning hole 123 on each end of one long side. Note that the positioning rib 811 has a tapered tip portion in the protruding direction. In this way, penetration in the positioning hole 123 and engagement with the first depression 4001 can be smoothly performed.

In addition, the stopper rib 812 is formed in a shape (thickness) that can be elastically deformed and has an engaging part protruding outward at the tip portion. Further, the outside portion of the engaging part has an inclined surface so that the tip side becomes thin. When the second protrusion 81 is inserted into the positioning hole 123, the inclined surface is pressed to a peripheral portion of the positioning hole 123 so that the stopper rib 812 is elastically deformed. Further, when the stopper rib 812 protrudes by a certain amount, the engaging part including the inclined surface engages with the edge part of the positioning hole 123 so that the second protrusion 81 is prevented from dropping off. When extracting the second protrusion 81 from the positioning hole 123, the stopper rib 812 is elastically deformed so that the engaging part can pass through the positioning hole 123. Further, if the substrate holder 8e is attached to the rear frame 1e so that the second protrusion 81 is not extracted from the positioning hole 123, the stopper rib 812 can be eliminated.

The liquid crystal display device E is assembled in the following procedure. Note that it is supposed that the reflection sheet 2 and the LED lamps 3 are attached to the rear frame 1e in advance. First, the substrate holder 8e is attached to the rear face of the support part 121 outside the slanting part 122 of the raised part 12 of the rear frame 1e so that the second protrusion 81 penetrates the positioning hole 123. In this case, the substrate holder 8e is positioned to contact with an outer face of the slanting part 122 and a rear face of the support part 121 and is fixed to the slanting part 122 with a screw Bt.

Further, in the state where the second protrusion 81 protrudes from the support part 121, the first depression 4001 is engaged with the second protrusion 81, and the optical process member 4e is positioned on the front side of the rear frame 1e so that the peripheral edge part is supported by the support part 121. A corner portion formed between the bottom face 4002 and the inner face 4003 of the first depression 4001 is contacted with a corner portion of the positioning rib 811 of the second protrusion 81, and hence the optical process member 4e is positioned with respect to the substrate holder 8e, namely to the rear frame 1e.

In this way, one rib of the positioning rib 811 contacts with the bottom face 4002 of the first depression 4001 so that the optical process member 4e is restricted from moving in a short side direction. In other words, the optical process member 4e is positioned in the short side direction. In addition, the other ribs of the pair of positioning ribs 811 respectively contact with the inner faces 4003 of the first depression 4001 so that the optical process member 4e is restricted from moving in the longitudinal direction. In other words, the optical process member 4e is positioned in the longitudinal direction. Further, when disposing the optical process member 4e, it is possible to first dispose the diffusion plate 41e in the rear frame 1e and then to dispose the optical sheets 42e and 43e so as to be overlaid on the front face of the diffusion plate 41e. In addition, it is possible to dispose the optical process member 4e in the rear frame 1e in the state where the diffusion plate 41e and the optical sheets 42e and 43e are overlaid.

After that, the pressing part 52 presses a peripheral edge part of a front face of the optical process member 4e, and the cell guide 5 is disposed so that the side wall portion 51 surrounds a periphery of the rear frame 1e. The fixing part 13 and the engaging part 50 are fixed with screw, and the cell guide 5 and the rear frame 1e are fixed to each other. In this way, the pressing part 52 of the cell guide 5 presses the peripheral edge part of the optical process member 4e to the support part 121, and the optical process member 4e is securely held so as not to be moved or deformed.

Further, the liquid crystal panel 61 of the liquid crystal cell 6 that is assembled separately is placed on the cell holding part 53 of the cell guide 5. In this case, the control substrate 62 is attached to the liquid crystal panel 61 via the flexible printed circuit FPC, and this control substrate 62 is fixed to the substrate holder 8e. Further, after the control substrate 62 is fixed to the substrate holder 8e, the bezel 7 is disposed to press a part outside the image display area of the liquid crystal panel 61, and the bezel 7 is fixed to the rear frame 1e. In this case, the frame part 71 of the bezel 7 is disposed to cover the front face of the cell guide 5 and hides the cell guide 5 viewed from the front (viewed in the Z direction).

As described above, in the liquid crystal display device E, the rear frame 1e, the optical process member 4e, and the liquid crystal cell 6 can be precisely positioned, and hence it is possible to make light from the backlight correctly enter the liquid crystal cell 6. In this way, it is possible to maintain high quality of an image displayed in the image display area of the liquid crystal display device E. In addition, in the liquid crystal display device E according to the present invention, it is sufficient to form the positioning hole 123 in the support part 121 of the rear frame 1e without a conventional cutting and bending process or plastic working process, and hence it is possible to eliminate the process and a mold necessary for the process. It is necessary to form the second protrusion 81 in the substrate holder 8e. Because the substrate holder 8e is a resin molded product, a mold is necessary regardless of presence or absence of the second protrusion 81, and an additional mold for manufacturing the second protrusion 81 is not necessary. For this reason, it is possible to reduce cost for designing and manufacturing the mold.

In addition, when the conventional plastic working of the rear frame 1e is used, a sharp cut edge surface contacts directly with the optical process member 4e. In this state, if a vibration or an impact is applied to the liquid crystal display device, a stress is apt to be concentrated on the cut edge surface portion, and hence the optical process member 4e may be cut or damaged. In the liquid crystal display device E according to the present invention, the second protrusion 81 formed integrally to the substrate holder 8e made of resin, namely the second protrusion 81 made of resin is used. For this reason, it is possible to prevent the optical process member 4e from being damaged by the sharp cut edge surface. In other words, in the case of the rear frame 1 e formed by bending metal sheet, it is possible to take a countermeasure against electromagnetic waves and/or static electricity. Because the optical process member 4e does not contact directly with the cut edge surface as described above, it is possible to prevent the optical process member 4e from being cut.

Note that the positioning rib 811 of the second protrusion 81 may be formed to be capable of being elastically deformed within a certain range. In a normal assembly, the positioning rib 811 is not deformed for positioning the rear frame 1e and the optical process member 4e. When an impact or a vibration is applied to the liquid crystal display device E, the positioning rib 811 is elastically deformed. In this way, it is possible to enhance the effect of suppressing deformation or damage of the optical process member 4e.

In this embodiment, one bulging part 400 including the first depression 4001 and one second protrusion 81 are disposed, but this structure is not a limitation. The numbers of them are not limited to one as long as they can be precisely positioned. For instance, a plurality of them may be disposed if the liquid crystal panel 61 is large. Further, a plurality of the bulging parts 400 including the first depressions 4001 and the second protrusions 81 may be disposed on one side or may be disposed on a plurality of sides. In addition, a plurality of them may be disposed on each of the plurality of sides.

### (Sixth embodiment)

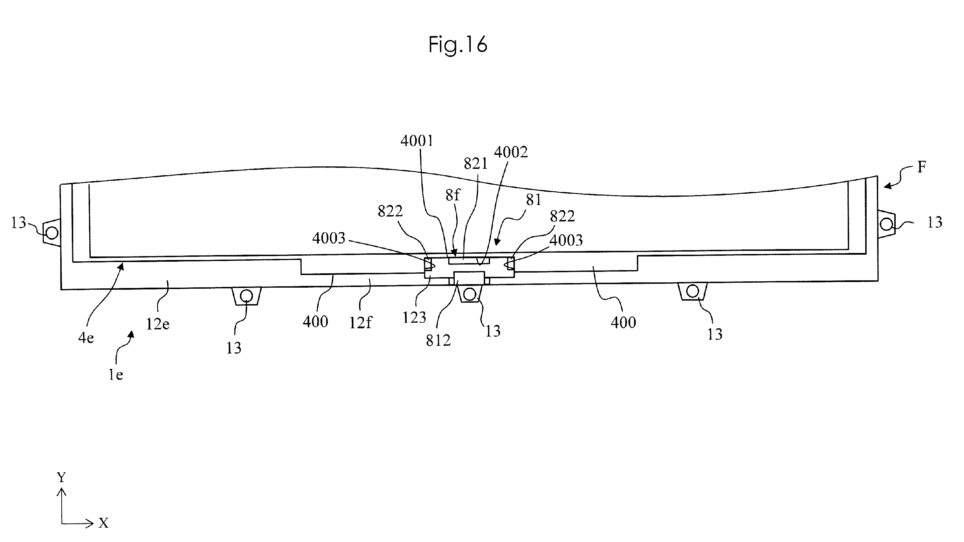

Another example of the liquid crystal display device according to the present invention is described with reference to the drawings. Fig. 16 is an enlarged view of the positioning part of the another example of the liquid crystal display device according to the present invention. A liquid crystal display device F of this embodiment has the same structure as the liquid crystal display device E of the fifth embodiment except for a positioning part 82 having a different structure. Substantially the same part is denoted by the same reference numeral, and description thereof is omitted.

As shown in Fig. 16, the positioning part 82 of a substrate holder 8f includes an elongated part 821 that contacts with the bottom face 4002 of the first depression 4001 and a pair of side support parts 822 disposed on both sides in the longitudinal direction of the elongated part 821. The elongated part 821 contacts with a long side of the positioning hole 123 and contacts with the bottom face 4002 of the first depression 4001. In this way, the optical process member 4e is positioned in a short side direction. In addition, the side support parts 822 respectively contact with short sides of the positioning hole 123 and respectively contact with the inner faces 4003. In this way, the optical process member 4e is positioned in the longitudinal direction.

Further, because the elongated part 821 and the pair of side support parts 822 have a structure capable of being elastically deformed, even if a vibration or an impact is applied to the liquid crystal display device F, stress is hardly concentrated on the first depression 4001. Thus, deformation or damage of the optical process member 4e can be suppressed, and deterioration of image quality can be suppressed.

Other features are the same as those in the fifth embodiment.

### (Seventh embodiment)

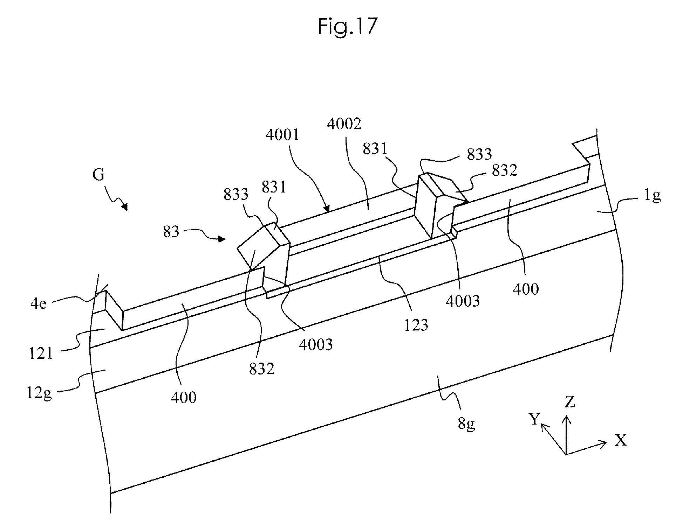

Still another example of the liquid crystal display device according to the present invention is described with reference to the drawings. Fig. 17 is an enlarged view of a positioning part of the still another example of the liquid crystal display device according to the present invention. A liquid crystal display device G of this embodiment has the same structure as the liquid crystal display device E in the fifth embodiment except for a second protrusion 83 having a different structure. Substantially the same part is denoted by the same reference numeral, and description thereof is omitted.

As shown in Fig. 17, the second protrusion 83 of a substrate holder 8g includes a pair of engaging ribs 831 disposed to contact with short sides in the longitudinal direction of the positioning hole 123. The tip portion of each of the pair of engaging ribs 831 includes an engaging part 832 protruding outward. A peripheral part of the engaging part 832 has an inclined surface becoming thinner toward the tip. In addition, the pair of engaging ribs 831 are formed in an elastically deformable manner (being elastically warped). Further, the surface from which the engaging part 832 of each of the positioning parts 831 protrudes and an adjacent pressing surface 833 are on the same plane.

As shown in Fig. 17, the engaging rib 831 of the second protrusion 83 has the engaging part 832 engaging with a front face of an edge part of the inner face 4003, and the inner face 4003 contacts with the engaging rib 831. In addition, the pressing surface 833 of the engaging rib 831 contacts with the bottom face 4002 of the first depression 4001. In this way, because the engaging part 832 engages with the front face of the edge part of the inner face 4003, movement of the optical process member 4e to the front side can be suppressed. In addition, because the inner face 4003 contacts with the engaging rib 831, movement of the optical process member 4e in the longitudinal direction is restricted. In other words, the optical process member 4e is positioned in the longitudinal direction. In addition, because the bottom face 4002 contacts with the pressing surface 833, movement of the optical process member 4e in the short side direction can be restricted. In other words, the optical process member 4 is positioned in the short side direction.

In addition, when the optical process member 4e is disposed at the support part 121 of the rear frame 1, a peripheral edge part of the first depression 4001 presses an inclined surface of the engaging part 832 so that the engaging rib 831 is elastically deformed inward. Further, when the engaging part 832 is moved to the front side of the optical process member 4e, because the engaging part 832 is not pressed by the inner face 4003 any more, the engaging rib 831 that was elastically deformed is restored to its original shape. In this way, the engaging part 832 engages with the edge part of the inner face 4003. In this way, using the second protrusion 83, it is possible to easily perform attachment, positioning, and drop-off prevention of the optical process member 4. In addition, by deforming the engaging rib 831 so that the engaging part 832 enters inside the first depression 4001, the optical process member 4e can be easily removed.

Other features are the same as those in the fifth embodiment and/or the sixth embodiment.

### (Eighth embodiment)

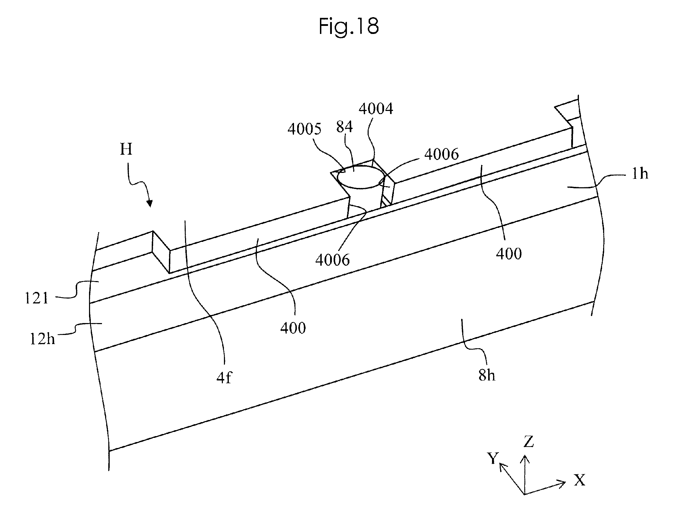

Still another example of the liquid crystal display device according to the present invention is described with reference to the drawings. Fig. 18 is an enlarged view of a positioning part of the still another example of the liquid crystal display device according to the present invention. A liquid crystal display device H of this embodiment has the same structure as the liquid crystal display device A in the first embodiment except for a first depression 4004 of an optical process member 4h and a second protrusion 84 of a substrate holder 8h having different structures. Substantially the same part is denoted by the same reference numeral, and description thereof is omitted.

As shown in Fig. 18, the second protrusion 84 is a boss having a cylindrical shape. Further, the first depression 4004 has a U shape and includes a bottom face 4005 and a pair of inner faces 4006 connecting to both ends of the bottom face 4005. Further, the bottom face 4005 is parallel to a long side of the optical process member 4h, and the inner face 4006 is parallel to a short side of the optical process member 4h.

The second protrusion 84 is inserted inside the first depression 4004, and the optical process member 4h is disposed at the support part 121. In this case, the second protrusion 84 contacts with the bottom face 4005 and the pair of inner faces 4006 of the first depression 4004. In this way, three cut surfaces contact with the cylindrical second protrusion 84 so that movements of the optical process member 4h in the longitudinal direction and in the short side direction are restricted, and the optical process member 4h is positioned.

Like this embodiment, in the case where the second protrusion 84 has a cylindrical shape, the second protrusion 84 contacts with three surfaces of the first depression 4004 at lines, and hence it is difficult to restrict rotation of the optical process member 4h about the second protrusion 84. For this reason, it is preferred that two or more second protrusions 84 and first depressions 4004 are provided.

Note that the first depression 4004 may have a shape that contact with the second protrusion 84 of this embodiment by surface contact, namely a shape that has a curved inner face. In addition, although the second protrusion 84 of this embodiment has a cylindrical shape, this is not a limitation. The second protrusion 84 may have a column shape having a polygonal cross section. In this case, it is preferred that the first depression 4004 is formed corresponding to the cross section of the second protrusion 84, but it is possible to adopt various shapes that contact with the positioning part in at least three positions.

Other features are the same as the fifth to the seventh embodiments.

In each embodiment described above, a rear face type backlight in which the LED lamps are arranged in a two-dimensional manner on the bottom face of the rear frame is exemplified as the liquid crystal display device, but this is not a limitation. It is possible to use an edge light type backlight in which a light guide plate is used, and the LED lamps are disposed so as to face a side face of the light guide plate. In this case, it is possible to use the light guide plate instead of the diffusion plate of the optical process member.

### (Ninth embodiment)

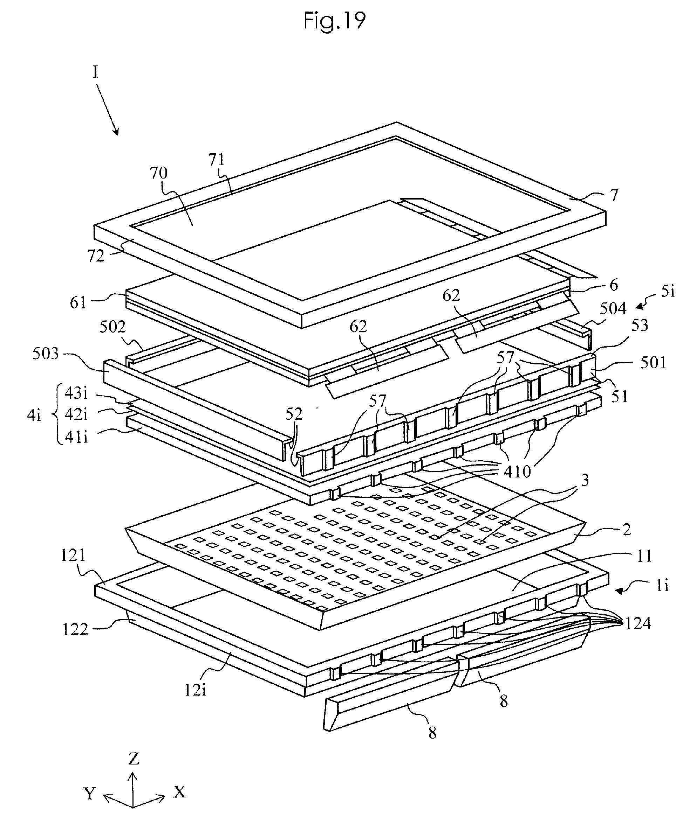

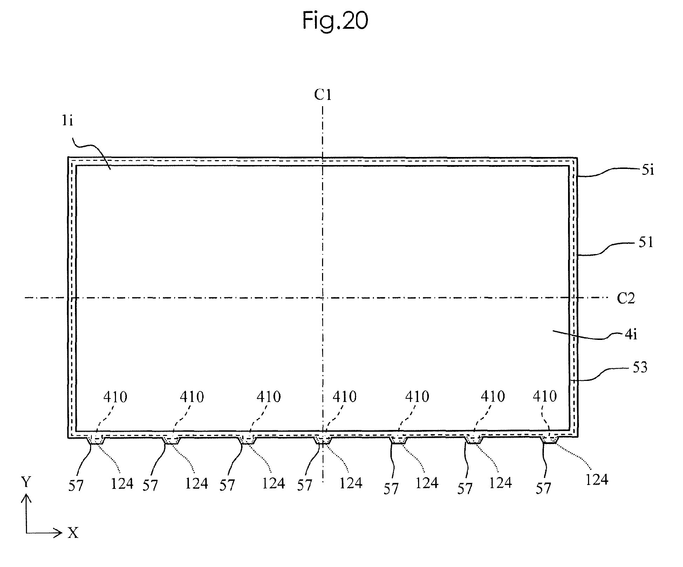

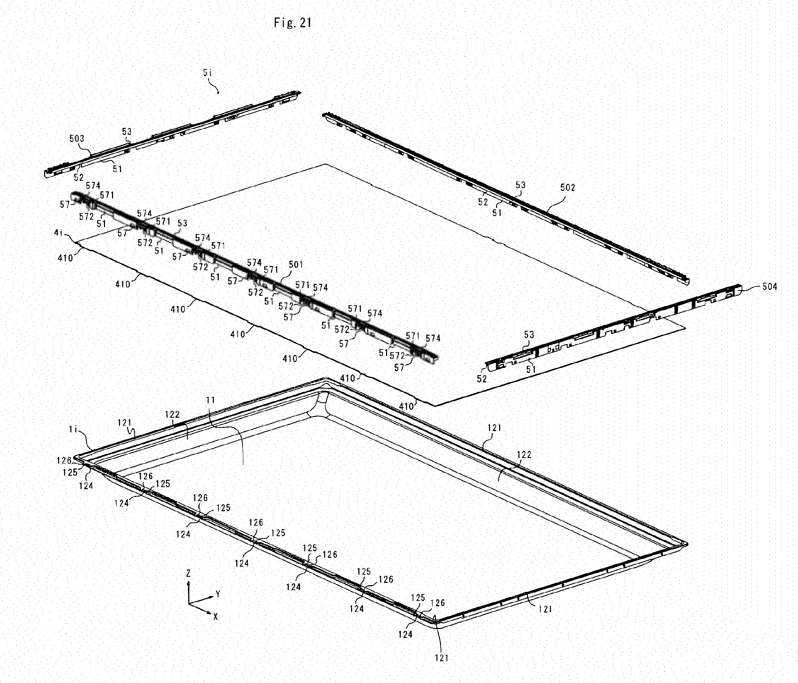

Still another example of the liquid crystal display device according to the present invention is described with reference to the drawings. Fig. 19 is an exploded perspective view of the still another example of the liquid crystal display device according to the present invention viewed from above, and Fig. 20 is a front view of the backlight of the liquid crystal display device shown in Fig. 19. In addition, Fig. 21 is an exploded perspective view of the rear frame, the optical process member, and the cell guide of the liquid crystal display device shown in Fig. 19. Note that a liquid crystal display device I shown in Fig. 18 has the same structure as the liquid crystal display device A except for a rear frame 1i, an optical process member 4i, and a cell guide 5i having different structures. For this reason, in the liquid crystal display device I, substantially the same part as the liquid crystal display device A is denoted by the same reference numeral, and description thereof is omitted.

The rear frame 1i is formed by bending metal sheet and includes the rectangular bottom part 11 and the raised part 12 protruding from four sides of the bottom part 11. The raised part 12 includes the support part 121 formed like a frame parallel to the bottom part 11, and the slanting part 122 disposed between the bottom part 11 and the support part 121.

Among the support parts 121 disposed at four sides of the rear frame 1i, the support part 121 disposed in the upper side in the state where the liquid crystal display device I is in use is provided with protruding parts 124 protruding outward, namely to the opposite side to the slanting part 122. Note that the rear frame 1 i is provided with total seven protruding parts 124 including one disposed in the middle portion and three disposed on each of the left and right side. The support part 121 has a large width at the protruding parts 124.

The optical process member 4i includes a diffusion plate 41i and optical sheets 42i and 43i disposed adjacent to a front face of the diffusion plate 41i. A peripheral edge part of a rear face of the optical process member 4i constituted of the diffusion plate 41i and the optical sheets 42i and 43i overlaid on the diffusion plate 41 i, namely a rear face of the diffusion plate 41 i is contacted with the support part 121 of the rear frame 1 i. In addition, a peripheral edge part of a front face of the optical process member 4i is contacted with the cell guide 5i (holding member). Further, the optical process member 4i is sandwiched and held between the support part 121 and the cell guide 5i.

Parts of the optical process member 4i corresponding to the protruding parts 124 are provided with first protrusions 410 protruding outward from the side portion. Note that the first protrusions 410 are formed only on the diffusion plate 41i having high strength, but this is not a limitation. The first protrusions 410 may be formed also on the optical sheets 42i and 43i. When the peripheral edge part of the optical process member 4i is disposed at the support part 121, the first protrusions 410 are overlaid on the protruding parts 124 viewed from the front (viewed in the Z direction). In addition, a tip portion of the first protrusion 410 has a surface parallel to the side face of the diffusion plate 41 i. In addition, if the optical process member 4i can be securely held by the protruding part 124 and the engaging part 57 described later (the second depression) of the cell guide 5i, the first protrusion 410 may be eliminated.

The cell guide 5i can be divided into parts corresponding to four sides of the support part 121 of the rear frame 1 i. The cell guide 5i is divided into a first part 501 disposed at an upper side, a second part 502 disposed at a lower side, a third part 503 disposed at a left side, and a fourth part 504 disposed at a right side, when the liquid crystal display device I is in use.

Further, the second part 502, the third part 503, and the fourth part 504 respectively include the side wall portion 51, the pressing part 52, and the cell holding part 53. The pressing part 52 presses the peripheral edge part of the optical process member 4i, and the side wall portion 51 is screwed to the side of the raised part 12. The first part 501 is proved with, in addition to the side wall portion 51, the pressing part 52, and the cell holding part 53, the engaging part 57 that engages with an outside of the protruding part 124 provided to the support part 121 of the rear frame 1i.

In addition, a side surface of the first part 501 has a structure in which the side wall portions 51 and the engaging parts 57 are alternately disposed. In a part of the support part 121 in which the protruding part 124 is not formed, the side wall portion 51 contacts with a side surface of the raised part 12.

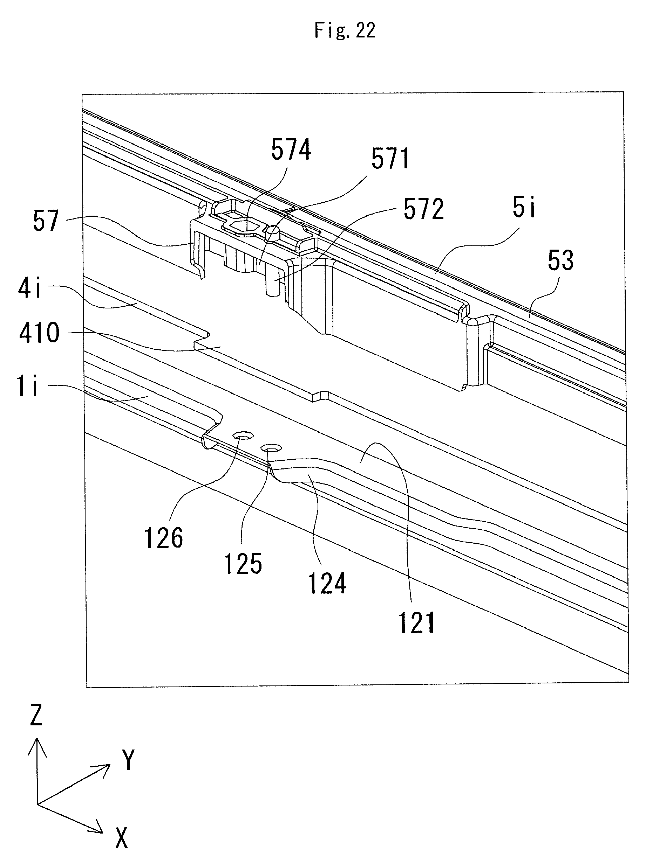

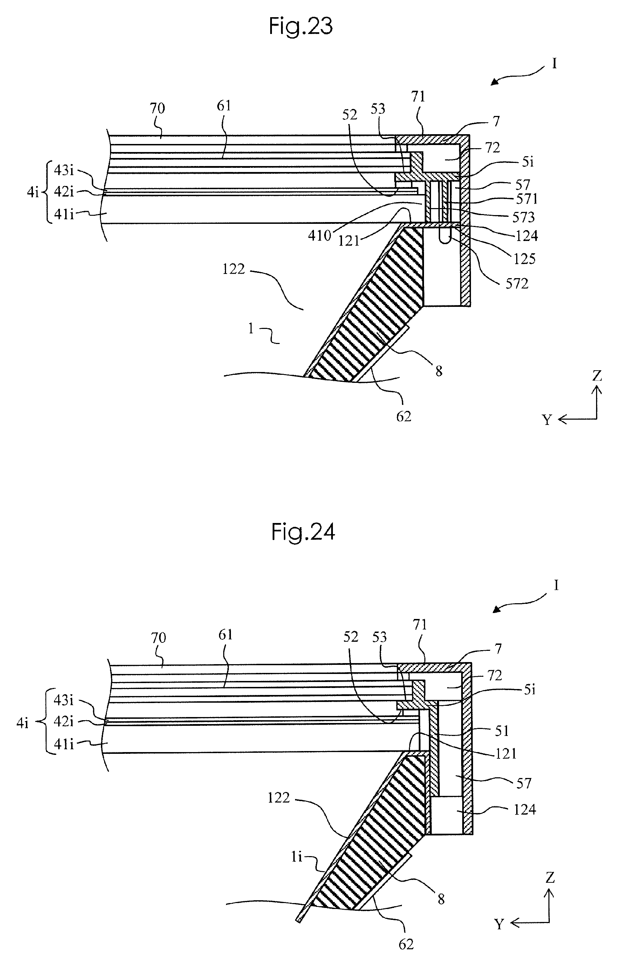

Hereinafter, the first part 501 of the cell guide 5i as a principal part of the present invention is described with reference to the drawings. Fig. 22 is an enlarged exploded perspective view showing engagement between the protruding part of the rear frame and the engaging part of the cell guide, Fig. 23 is a schematic cross-sectional view of the protruding part of the liquid crystal display device, and Fig. 24 is a schematic cross-sectional view of a part other than the protruding part of the liquid crystal display device.

As shown in Figs. 20 and 22, the protruding part 124 is formed in a trapezoidal shape having a thin outer side (tip side) viewed from the front (viewed in the Z direction). The protruding part 124 has a bent side portion formed by bending metal sheet. By forming this bent side portion, strength of the protruding part 124 is enhanced so that deformation is suppressed. In addition, the protruding part 124 is provided with a positioning hole 125 and a fixing hole 126.

The engaging part 57 is the second depression that depresses in a thickness direction of the liquid crystal display device I (in the Z direction), and engages an outside of the protruding part 124 when the first part 501 is attached to the support part 121. The engaging part 57 includes a support rib 571 that protrudes from a part facing the support part 121 (in the Z direction) and contacts with the protruding part 124 so as to support the first part 501, and a positioning boss 572 formed integrally to the support rib 571 so as to protrude longer than the support rib 571. In addition, the part of the engaging part 57 facing the support part 121 is provided with a holding rib 573 protruding from an inner side of the support rib 571 to have the same protruding length as the support rib 571. Further, the engaging part 57 is provided with a screw hole 574 at a position corresponding to the fixing hole 126 viewed from the front (viewed in the Z direction).

As shown in Figs. 22 and 23, the support rib 571 is a plate-like member (rib) protruding from a surface of the engaging part 57 facing the rear frame 1 i. In addition, the support rib 571 and the holding rib 573 are ribs extending in a longitudinal direction of the first part 501 of the cell guide 5i, and the support rib 571 and the holding rib 573 are arranged in a direction crossing the longitudinal direction of the first part 501. In this way, the engaging part 57 has a certain contact length in the longitudinal direction of the first part 501, and the support rib 571 and the holding rib 573 disposed with a certain interval therebetween are contacted with the protruding part 124. In other words, the engaging part 57 and the protruding part 124 are contacted with certain widths in the longitudinal direction and in the short side direction, and hence the first part 501 can be stably attached to the support part 121 of the rear frame 1i.

As shown in Figs. 21, 22, and 23, the positioning boss 572 and a cylindrical part forming the screw hole 574 are disposed side by side in the longitudinal direction of the first part 501. Further, the positioning boss 572 and the screw hole 574 are formed integrally to the support rib 571. In this way, the support rib 571, the positioning boss 572, and the screw hole 574 are reinforced by each other.

In the liquid crystal display device I, in the state where the optical process member 4i is disposed at the support part 121 of the rear frame 1i with the reflection sheet and the LED lamps, the first part 501 to the fourth part 504 of the cell guide 5i are respectively attached to corresponding sides of the support part 121. Although illustration in the drawings is omitted, the first part 501 to the fourth part 504 have a structure capable of being connected with screws or the like. Here, they are attached separately as an example, but it is possible to assemble the cell guide 5i in a frame shape in advance and to attach the cell guide 5i to the rear frame 1i.

In the liquid crystal display device I, because the optical process member 4i is a thin plate-like member, the optical process member 4i may be shifted by an air flow in the assembly or a force generated in screwing. If the optical process member 4i is shifted, unevenness of light from the backlight is apt to occur so that quality of a displayed image may be deteriorated. In particular, if the width of the support part 121 is small, it is difficult to sufficiently secure a contact portion between the support part 121 and the cell guide 5i. For this reason, the cell guide 5i is apt to shift from the support part 121 (is hardly attached in a stable manner), and hence the optical process member 4i is apt to be shifted.

Accordingly, after the optical process member 4i is disposed so that the support part 121 supports the side face, the first part 501 is first attached. In a part of the first part 501 corresponding to the protruding part 124, the cylindrical part forming the support rib 571, the holding rib 573, and the screw hole 574 contacts with the protruding part 124. In a part of the first part 501 shifted from the protruding part 124, the side wall portion 51 contacts with the side surface of the raised part 12.

Further, the positioning boss 572 of the engaging part 57 is inserted in the positioning hole 125, so that the first part 501 can be attached to the support part 121 at a correct position. In addition, when positioning the first part 501, the first protrusion 410 of the optical process member 4i is entered in the engaging part 57 (second depression). The side surface of the first protrusion 410 contacts with the holding rib 573, and the optical process member 4i is positioned correctly to the first part 501, namely to the support part 121 also. Further, the screw hole 574 of the first part 501 and the fixing hole 126 are screwed (not shown), so that the first part 501 is fixed to the support part 121, and one side of the optical process member 4i is held at a correct position by the support part 121 and the first part 501.

In each engaging part 57 of the first part 501, the positioning boss 572 is inserted in the positioning hole 125. In this way, even if a force (torque) of screwing is applied to the first part 501, the positioning boss 572 and the positioning hole 125 withstand against the torque. Accordingly, the torque of screwing is hardly transmitted to the optical process member 4i, and the optical process member 4i is hardly shifted. In addition, because the protruding part 124 and the engaging part 57 sandwich and hold the first protrusion 410, an area of the optical process member 4i sandwiched between the cell guide 5i and the support part 121 is increased. Thus, the optical process member 4i is firmly held by the cell guide 5i and the support part 121.

After that, the second part 502, the third part 503, and the fourth part 504 are respectively attached, and the side wall portion 51 of each part is screwed (not shown) to the side face of the raised part. In this case, because the optical process member 4i is held by the first part 501, the optical process member 4i is hardly shifted or deformed when each part is attached. As described above, the liquid crystal display device I according to the present invention can display an image with stable image quality and can have a narrower bezel.

In addition, a general liquid crystal display device is provided with a recessed handling part formed on an upper part of an outer casing in many cases. When the liquid crystal display device is held by the holding part and is moved, a force acts on an upper part of the backlight, and the pressing part 52 of the cell guide 5i is apt to be deformed in the direction separated from the optical process member 4i. The liquid crystal display device I according to the present invention has a structure in which the support rib 571 and the holding rib 573 of the engaging part 57 are contacted with the protruding part 124, and hence the pressing part 52 is prevented from being separated from the optical process member 4i. In this way, deterioration of image quality can be suppressed.

Other features are the same as those in the embodiments described above.

The liquid crystal display device I according to this embodiment includes the protruding part 124 formed at the part of the rear frame 1i constituting the upper side of the support part 121 when the liquid crystal display device I is in use, and the first protrusion 410 formed on the upper side of the optical process member 4i at the position corresponding to the protruding part 124. Further, the first part 501 constituting the upper side of the cell guide 5i is provided with the engaging part 57 (second recess) at the position corresponding to the protruding part 124 and the first protrusion 410. However, this structure is not a limitation. The protruding part 124, the first protrusion 410, and the engaging part 57 may be disposed on a part constituting the other side or may be disposed on parts constituting a plurality of sides (e.g., opposed sides or neighboring sides) or all sides.

Although the embodiments of the present invention are described above, the present invention is not limited to these contents. In addition, the embodiments of the present invention can be variously modified as long as it does not deviate from the spirit of the present invention. In addition, the embodiments described above can be appropriately combined with each other.

The display device described above includes a display unit, a light source, an optical process member having a peripheral edge part on which at least one of a first depression and a first protrusion is formed, a support member for supporting a peripheral edge part of a first surface of the optical process member, a holding member disposed on a second surface side different from the first surface of the optical process member, and at least one of a second protrusion to be entered in the first depression and a second depression to enter the first protrusion formed on the support member or the holding member.

According to this structure, the optical process member is provided with at least one of the first depression and the first protrusion, the support member or the holding member is provided with the second protrusion to be entered in the first depression or the second depression to enter the first protrusion, so that the second protrusion or the second depression is contacted with the support member or the holding member. Further, the holding member presses the optical process member by the part where the second protrusion or the second depression is not formed.

Because the optical process member is provided with the first depression, and the second protrusion to be entered in the first depression makes the support member and the holding member contact with each other, the second protrusion has a width in a depressing direction of the first depression. In this way, a contact part between the support member and the holding member has a width in the depressing direction of the first depression. For instance, in a case where the second protrusion has a shape to fill in the first depression, surface contact is achieved. In addition, also in a case where the second protrusion is constituted of a combination of plate-like members (in a case of a line contact), the second protrusion has a contact part extending in the depressing direction of the first depression. In other words, even if the contact part of the second protrusion with the support member or the holding member is a line contact, a shape of the contacting part has a two-dimensional shape with a width in the depressing direction of the first depression. On the other hand, in the case of the optical process member without the first depression, the support member and the holding member are contacted at the second protrusion extending linearly along the side face neighboring the first surface and the second surface of the optical process member. In other words, they are contacted in a one-dimensional manner (line contact).

If the optical process member is not provided with the first depression, when the support member and the holding member are moved relatively in a direction crossing the extending direction of the second protrusion, the second protrusion and the support member or the holding member may not contact with each other. On the other hand, in a structure including the first depression and the second protrusion, even if the support member and the holding member are moved relatively in the same manner, because the second protrusion had a width in the thickness direction, the second protrusion maintains the contact with the support member or the holding member at least partially. In this way, with the structure including the second protrusion to be entered in the first depression, the optical process member can be sandwiched and held securely compared with a structure without the first depression and the second protrusion to be entered in the first depression. As described above, even if a narrower bezel is achieved, unevenness of luminance of light from the backlight can be suppressed so that deterioration of image quality can be suppressed.

In addition, the optical process member is provided with the first protrusion, and the second depression to enter the first protrusion makes the support member and the holding member contact with each other. Thus, the contact part between the support member and the holding member has a width in the depressing direction of the second depression. In this way, with the structure including the first protrusion to be entered in the second depression in the same manner as described above, the optical process member can be sandwiched and held securely compared with a structure without the first protrusion and the second depression to enter the first protrusion. As described above, even if a narrower bezel is achieved, unevenness of luminance of light from the backlight can be suppressed so that deterioration of image quality can be suppressed.

The first depression or the first protrusion may be formed on at least one side of the peripheral edge part. In addition, the first depression or the first protrusion may be formed on a plurality of sides of the optical process member. For instance, the first depressions or the first protrusions may be formed on opposed sides, or neighboring sides, or all sides of the peripheral edge part.

In the display device described above, the second protrusion may be formed on the holding member and may contact with the support member. With this structure, even if a moment twisting the holding member occurs at the upper part of the display device, because the part of the second protrusion contacting with the support member has a width in the depressing direction of the first depression, it is possible to withstand against the moment. In this way, even if the moment twisting holding member occurs, contact between the holding member and the support member is maintained. Thus, the optical process member is prevented from shifting or dropping off.

In the display device described above, the optical process member may include a diffusion plate or a light guide plate and a plurality of sheets having different functions.

In the display device described above, the support member may be provided with a hole, and the holding member may be provided with a boss to be inserted in the hole.

With this structure, because the boss is inserted in the hole, a screwing torque when fixing the holding member to the support member is prevented from propagating to the optical process member as the boss and the hole withstand the screwing torque. Thus, the optical process member can be prevented from shifting or warping when the holding member is attached.

In the display device described above, the second protrusion may be formed on the support member so as to contact with the holding member.

In the display device described above, the support member may include the substrate holding member for holding the substrate, and the second protrusion may be formed on the substrate holding member.

According to this structure, the second protrusion formed integrally to the substrate holding part made of resin performs positioning of the optical process member. Compared with a conventional case using the second protrusion formed by processing the metal rear frame, concentration of stress on the first depression can be suppressed. In this way, the optical process member can be protected from being cut or hurt.

In addition, even if vibration or drop impact occurs when being transported, it is possible to protect the optical process member from being cut or damaged due to rubbing or pressing between the second protrusion and the first depression.

In the display device described above, the second protrusion may have a cylindrical shape.

In the display device described above, the second protrusion may include a support pillar that can be elastically deformed and a hook part formed on a tip of the support pillar, so that the hook part engages with the peripheral edge part of the first depression.

In the display device described above, the support member may have a protruding part that is partially protruded in a direction perpendicular to a direction along the peripheral edge part and parallel to the first surface, and the second protrusion may contact with the protruding part.

According to this structure, the support member and the holding member can be stably contacted with each other. Because the holding member can be securely contacted with the support member while the protruding part and the first protrusion is securely contacted with each other, the optical process member can be securely pressed.

In the display device described above, the protruding part may be provided with a hole, and the holding member may be provided with a boss to be inserted in the hole of the protruding part. According to this structure, because the boss is inserted in the hole of the protruding part, a screwing torque when the holding member is fixed to the support member is prevented from propagating to the optical process member as the boss and the hole withstand the screwing torque. Thus, the optical process member can be protected from shifting or warping when the holding member is attached.

In the display device described above, the holding member may be provided with a rib contacting with a side face of the optical process member. According to this structure, the holding member can easily and securely position the optical process member with respect to the support member.

In the display device described above, a part of the optical process member corresponding to the protruding part may be provided with the first protrusion that protrudes in a direction parallel to the first surface.

In the display device described above, the first depression may have the bottom face and the inner face perpendicular to the bottom face.

In the display device described above, the first depression may have the bottom face and the inner face inclined to be narrower as being away from the bottom face.

According to the display device described above, it is possible to achieve a narrower bezel without deteriorating quality of an image displayed on the image display area.

According to the display device described above, it is possible to provide a display device that has a simple structure and can display a stable high quality image by preventing the optical process member from being cut.

In the display device described above, the second protrusion may have a rib extending in a direction along the first surface of the optical process member and crossing the side with the second depression.

In the display device described above, the optical process member may be provided with the second depression formed on a side that becomes an upper side when the support member supports the optical process member in an erected state.

In the display device described above, the second protrusion may be made of resin.

## Claims

1. A display device, comprising:
a display unit;
a light source;
an optical process member including a peripheral edge part on which at least one of a first depression and a first protrusion is formed;
a support member for supporting a peripheral edge part of a first surface of the optical process member; and
a holding member disposed on a second surface side different from the first surface of the optical process member, **characterized in that**
the support member or the holding member is provided with a second protrusion to be entered in the first depression and a second depression to enter the first protrusion.

2. The display device according to claim 1, **characterized in that** the optical process member is formed in a rectangular shape having a plurality of side portions, and at least one of the first depression and the first protrusion is formed on at least one of the side portions.

3. The display device according to claim 1 or 2, **characterized in that** the optical process member is formed in a rectangular shape having a plurality of side portions, and at least one of the first depression and the first protrusion is formed on opposed the side portions.

4. The display device according to any one of claims 1 to 3, **characterized in that** the optical process member is formed in a rectangular shape having a plurality of side portions, and at least one of the first depression and the first protrusion is formed on adjacent the side portions.

5. The display device according to any one of claims 1 to 4, **characterized in that** the second protrusion is formed on the holding member.

6. The display device according to any one of claims 1 to 5, **characterized in that** the optical process member includes a diffusion plate or a light guide plate and a plurality of sheets having different functions.

7. The display device according to any one of claims 1 to 6, **characterized in that** the support member is provided with a hole, and the holding member is provided with a boss to be inserted in the hole.

8. The display device according to any one of claims 1 to 7, **characterized in that** the second protrusion is formed on the support member and contacts with the holding member.

9. The display device according to any one of claims 1 to 8, **characterized in that**
the support member includes a substrate holding member for holding a substrate, and
the second protrusion is formed on the substrate holding member.

10. The display device according to any one of claims 1 to 9, **characterized in that**
the support member has a protruding part that is partially protruded in a direction perpendicular to a direction along the peripheral edge part and parallel to the first surface, and
the second depression contacts with the protruding part.

11. The display device according to any one of claims 1 to 10, **characterized in that**
the protruding part is provided with a hole, and
the holding member is provided with a boss to be inserted in the hole.

12. The display device according to any one of claims 1 to 11, **characterized in that** the holding member is provided with a rib that contacts with a side face of the optical process member.

13. The display device according to any one of claims 1 to 12, **characterized in that** a part of the optical process member corresponding to the protruding part is provided with the first protrusion that protrudes in a direction parallel to the first surface.

14. The display device according to any one of claims 1 to 13, **characterized in that** the first depression has a bottom face and an inner face perpendicular to the bottom face.

15. The display device according to any one of claims 1 to 14, **characterized in that** the first depression has a bottom face and a pair of inner faces facing each other, the inner faces inclined to be narrower the distance of the inner faces as being away from the bottom face.
